# EUROPÄISCHE PATENTSCHRIFT

(11) **EP 0 347 407 B1**
(45) Veröffentlichungstag und Bekanntmachung des Hinweises auf die Patenterteilung: **19.05.1993**
(21) Anmeldenummer: 89890132.7
(22) Anmeldetag: 03.05.1989
(51) Int. Cl.: B01D 53/34

(54) **Einrichtung zum Abscheiden von Schad- oder Geruchsstoffen aus gasförmigen Medien durch biologische Filterung**
Device for removal of pollutants or odours from gases by biological filtration
Dispositif pour l'élimination de polluants ou d'odeurs contenus dans des gaz par filtrage biologique

(30) Priorität: 10.05.1988 AT 1226/88
(43) Veröffentlichungstag der Anmeldung: 20.12.1989
(73) Patentinhaber: Fleischhacker, Gerhard, Dr. Dipl.-Ing., A-9330 Treibach (AT)
(72) Erfinder: Fleischhacker, Gerhard, Dr. Dipl.-Ing., A-9330 Treibach (AT)
(74) Vertreter: Holzer, Walter, Dipl.-Ing.

(56) Entgegenhaltungen:
- EP-A- 0 154 684
- WO-A-86/03689
- DE-A- 2 448 137
- DE-A- 3 201 393

## Beschreibung

Die Erfindung betrifft eine Einrichtung zum Abscheiden von Schad- oder Geruchsstoffen aus gasförmigen Medien durch biologische Filterung, mit einem zylindrischen oder prismatischen Filtergehäuse mit vertikaler Achse, in dem über einem gasdurchlässigen Stützboden eine Schicht aus biologischem Filtermaterial angeordnet ist, und mit Einrichtungen zum Durchleiten des gasförmigen Mediums in axialer Richtung durch diese Filtermaterialschicht.

Besondere Bedeutung hat die biologische Filterung zur Beseitigung der Geruchsbelästung in der Umgebung von bestimmten Industrieanlagen, landwirtschaftlichen Betrieben und insbesondere von Kläranlagen durch aus diesen Betrieben und Anlagen austretende übelriechende Gase.

Durch Durchleiten des Rohgases durch eine biologische Filtermasse, z.B. Humus, kann das Gas unter der Voraussetzung einer entsprechenden Dimensionierung des Biofilters bekanntlich so weit gereinigt werden, daß die Geruschkonzentration bis unter die nach VDI-Vorschrift 3881 bei 30 bis 70 GE/m³ liegende Störschwelle absinkt.

Die Funktion eines sogenannten Biofilters ist abhängig von
- der Zusammensetzung des zu reinigenden Rohgases, der Feuchtigkeit und der Temperatur,
- der Verteilung des Rohgases vor Eintritt in die biochemische Filtermasse,
- der Zusammensetzung der verwendeten Filtermasse und seiner chemischen und physikalischen Parameter, wie Korngröße oder Krümmelstruktur usw.,
- der Schichtdicke der Filtermasse und
- der Verweilzeit des Rohgases im Filter.

Für die Herstellung von Biofiltern waren bisher umfangreiche bauliche Maßnahmen erforderlich, nämlich das Anlegen von Baugruben oder Betonwannen mit geeignetem Filterboden oder die Verwendung transportabler Container, z.B. in Beton- oder Stahlblechausführung.

Die Erfindung zielt darauf ab, ein Biofilter der Containerbauweise zu schaffen, das aus wenigen in Massenfertigung und daher kostensparend herstellbaren modulartigen Teilen in leicht transportabler Größe aufbaubar ist, so daß es den für seine Funktion maßgeblichen, häufig zeitlich veränderlichen Parametern leicht angepaßt werden kann.

Diese Aufgabe wird bei einer Einrichtung der einleitend angegebenen Art erfindungsgemäß dadurch gelöst, daß das Filtergehäuse aus übereinander angeordneten vorgefertigten Gehauseelementen aus Beton, Kuntststoff, Holz oder Metallblech besteht, von denen das unterste ein wannenförmiges Bodenelement mit einem über dem Wannenboden eingesetzten gasdurchlässigen Stützboden und zumindest einer zwischen diesen beiden Böden angeordneten Mantelöffnung ist, wogegen die über diesem Bodenelement angeordneten Gehäuseelemente bis über die Schichthöhe des biologischen Filtermaterials dieses Material umschließende ring- oder rahmenartige Gehäuseelemente gleichen Querschnitts wie das Bodenelement sind. Eine beliebig große Biofilteranlage kann aus mehreren, als Module in ein Rohgasverteilernetz einbezogenen Filtereinrichtungen der geschilderten Art aufgebaut werden.

Gemäß einer bevorzugten Ausführungsform der Erfindung sind im Mantel des Bodenelementes, vorzugsweise in gleichen Winkelabständen, mehrere Mantelöffnungen ausgebildet. Durch die Vorsehung mehrerer Mantelöffnungen im Bodenteil des Fil tergehäuses lassen sich überdies Serien-, Parallel- oder Sternschaltungen von erfindungsgemäßen Biofiltern erzielen. Nach einem anderen Erfindungsmerkmal ist an den Wannenboden des Bodenelementes, wie an sich bekannt, ein Drainagerohr angeschlossen. Nach einem weiteren Erfindungsmerkmal weisen die Gehäuseelemente formschlüssig ineinandergreifende Stoßfugen auf. Die Stapelh Höhe des Filtergehäuses kann auf diese Weise unter Sicherung eines stabilen Gesamtaufbaues gesteigest und so dem in der Praxis stark schwankenden Bedarf angepaßt werden.

Eine erfindungsgemäße Anlage zum Abscheiden von Schad-oder Geruchsstoffen aus Abgasen oder Ablüften durch biologische Filterung zeichnet sich dadurch aus, daß sie aus mehreren durch Serien-, Parallel- oder Sternschaltung als Module in ein Rohgasverteilungsnetz einbezogenen Filtereinheiten der geschilderten Art besteht.

Weitere Merkmale und Vorteile der Erfindung gehen aus der nachfolgenden Beschreibung von Ausführungsbeispielen an Hand der Zeichnungen hervor. Es zeigen:

Fig. 1 eine erfindungsgemäße Biofiltereinheit mit einem Zuluft- und Drainagesystem im Querschnitt und die

Fig. 2, 3 und 4 schematisch erfindungsgemäße Biofilteranlagen, die aus modulartigen Filtereinheiten nach Fig. 1 durch Serien-, Parallel- bzw. Sternschaltung gebildet sind.

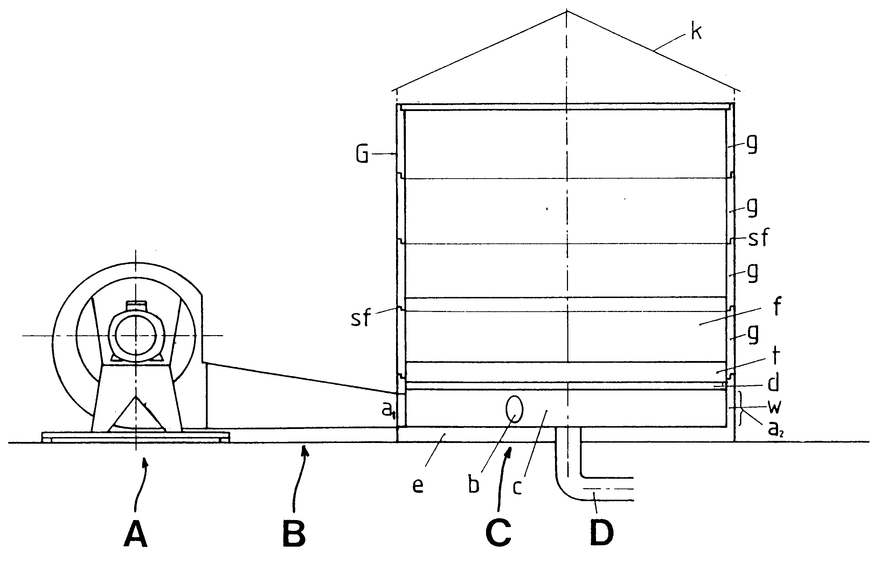

In Fig. 1 bedeuten A einen Ventilator für den Transport des Rohgases (mit Schadstoffen beladenes Abgas oder mit Geruchsstoffen beladene Abluft), B die Rohgaszuleitung und C die erfindungsgemäße modulartige Biofiltereinheit.

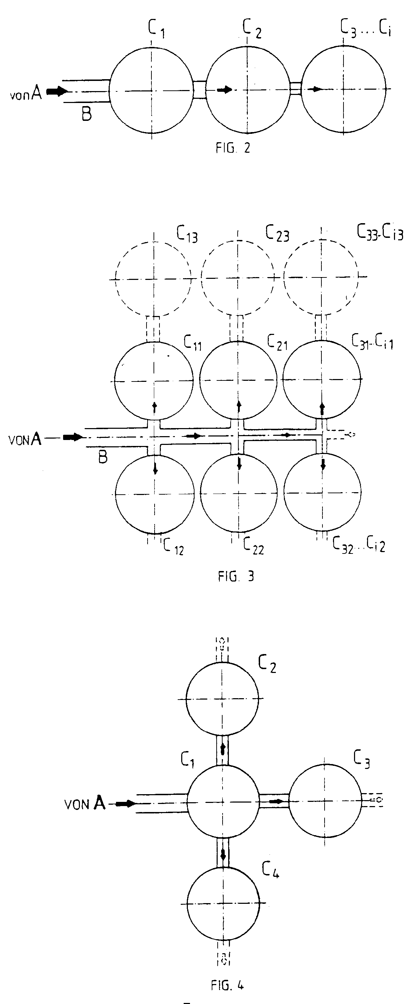

Die Filtereinheit C hat ein Gehäuse G, dessen unterster Teil ein wannenförmiges Bodenelement w mit einem über dem Wannenboden e eingesetzten gasdurchlässigen Stützboden d, z.B. aus Sickerbeton oder porösem Kunststoff, ist. Über dem Bodenelement w sind bis über die Schichthöhe des vom Stützboden d abgestützten biologischen Filtermateriales f dieses Material umschließende ring- oder rahmenartige Gehäuseelemente g aufgesetzt, die gleichen Querschnitt wie das Bodenelement w haben und dem jeweiligen Bedarf entsprechend den Aufbau verschieden hoher Filtergehäuse ermöglichen. Die Gehäuseelemente w, g des Filtergehäuses G sind in transportabler Größe vorgefertigte Bauteile aus Beton, Kunststoff, Holz oder Metallblech und haben vorzugsweise formschlüssig ineinandergreifende Stoßfugen sf. Zwischen den beiden Böden d und e ist in der Mantelwand des Bodenelementes zumindest eine Zuluftöffnung a₁ vorgesehen, nämlich für den Fall einer Kleinanlage, die nur eine einzige Filtereinheit erfordert. Im allgemeinen sind mehrere solcher Öffnungen a₁, a₂ usw. vorgesehen, um die Zusammenfassung mehrerer modulartiger Filtereinheiten zu einer großen Anlage zu ermöglichen, wie dies noch an Hand der Fig. 2 bis 4 beschrieben wird. Die Mantelöffnungen a im Bodenelement sind vorzugsweise in gleichen Winkelabständen ausgebildet. Das Wandmaterial des Bodenelementes kann eine größere Anzahl von gleichabständigen Schwächungslinien oder Schwächungsbereichen aufweisen, die potentielle Durchbrechungsstellen für Mantelöffnungen bilden, welche jeweils in einer dem Bedarf entsprechenden Anzahl hergestellt werden.

An den Wannenboden e des Bodenelementes w ist ein Drainagerohr D für anfallendes Regen- oder Sickerwasser angeschlossen, und ferner ist im Bodenteil eine Inspektionsöffnung b vorgesehen.

Wie dargestellt, wird die Filtereinheit C vorzugsweise von unten nach oben vom Rohgas durchströmt. Die Rohgaszuleitung B mündet über die Öffnung a₁ in eine Verteilerkammer c. Das Rohgas durchsetzt den gasdurchlässigen Stützboden d, der z.B. siebartig ausgebildet ist oder aus Sickerbeton besteht. Vorteilhaft befindet sich über dem Stützboden d eine Trenn- oder Schüttschicht t, die ausschließlich als Trennkörper zwischen dem Stützboden und dem Filtermedium dient und den Zweck hat, ein Verkleben oder Verschmutzen des Stützbodens soweit wie möglich zu verhindern. Uber der Trennschicht t wird das biologische Filtermaterial f lose aufgeschüttet. Hiebei kann es sich um Humus, verrottetes Holz, mit Klärschlamm angereicherten Torf od.dgl. handeln. Bei einer entsprechenden Schichtdicke wird im Filtermaterial der biologische Abbau von Schad-oder Geruchsstoffen im Rohgas erreicht.

Wenn sichergestellt ist, daß das Rohgas ausreichend mit Feuchtigkeit angereichert ist, kann die Filtereinheit mit einer regenabweisenden Kappe K ausgerüstet werden, was aber für die Funktion des Filters nur einen untergeordneten Einfluß hat. Das gereinigte Rohgas, welches das Filtermaterial von unten nach oben durchströmt hat, kann anschließend direkt ins Freie ausgeblasen werden.

Wenn Rohgastemperaturen bis zu max. 50° C und eine ausreichende Luftfeuchtigkeit sichergestellt sind, kann eine zusätzliche Befeuchtung und Aufheizung des von Geruchsstoffen zu reinigenden Rohgases entfallen.

Die Aufstellung der vorgefertigten Filtereinheiten (Module) kann auf entsprechend vorbereiteten Betonfundamenten, Schutt, Sand oder sonstigen in geeigneter Weise befestigten Bodenfundamenten erfolgen.

Zur Verhinderung von Frosteinwirkungen im Filter kann die Filtereinheit C gegenüber der Umgebung mit einem entsprechend dimensionierten Isolierkörper (Stroh, Sägespäne, Stein- oder Glaswolle etc.) umgeben werden. Ein Einbau bzw. Absenken der Filtereinheit unter Bodenniveau kann ebenfalls erfolgen.

Fig. 2 zeigt die Serienschaltung von mehreren Filtereinheiten bzw. Modulen C₁ - Cᵢ mit Hilfe von Verbindungsleitungen; Fig. 3 stellt die Parallelschaltung von Modulen C₁₁, C₁₂ - Cᵢ₁, Cᵢ₂ dar und erläutert überdies die Möglichkeit einer zusätzlichen Serienschaltung von Modulen C₁₃, C₁₃ und C₁₁, Cᵢ₁. Schließlich zeigt Fig. 4 eine Sternschaltung dreier Module C₂, C₃ und C₄ mit einem im Sternmittelpunkt angeordneten Modul C₁.

Mittels geeigneter Verteilernetze können Serien- und Parallelschaltungen der Module beliebig kombiniert werden und durch entsprechende Steuerkreise und Ventile in den Verbindungsleitungen kann die Anzahl der jeweils wirksamen Filter dem Bedarf und den Wartungserfordernissen angepaßt werden, und zwar so, daß jeder Modul in vorgegebenen Zeitabständen in den Rohgasstrom einbezogen wird, damit die biologische Filtermasse in allen Modulen ihre Funktionsfähigkeit beibehält.

## Patentansprüche

1. Einrichtung zum Abscheiden von Schad- oder Geruchsstoffen aus gasförmigen Medien durch biologische Filterung, mit einem zylindrischen oder prismatischen Filtergehäuse (G) mit vertikaler Achse, in dem über einem gasdurchlässigen Stützboden (d) eine Schicht aus biologischem Filtermaterial angeordnet ist, und mit Einrichtung zum Durchleiten des gasförmigen Mediums in axialer Richtung durch diese Filter materialschicht, dadurch gekennzeichnet, daß das Filtergehäuse (G), aus übereinander angeordneten vorgefestigten Gehäuseelementen (w, g) aus Beton, Kunststoff, Holz oder Mettallblech besteht, von denen das unterste ein wannenförmiges Bodenelement (w) mit einem über dem Wannenboden (e) eingesetzten gasdurchlässigen Stützboden (d) und zumindest einer zwischen diesen beiden Böden (d, e) angeordneten Mantelöffnung (a₁, a₂) ist, wogegen die über diesen Bodenelement (w) angeordneten Gehäuseelemente bis über die Schichthöhe des biologischen Filtermaterials (f) dieses Material umschließende ring- oder rahmenartige Gehäuseelemente (g) gleichen Querschnitts wie das Bodenelement (w) sind.

2. Einrichtung nach Anspruch 1, dadurch gekennzeichnet, daß im Mantel des Bodenelementes (w), vorzugsweise in gleichen Winkelabständen, mehrere Mantelöffnungen (a₁, a₂) ausgebildet sind.

3. Einrichtung nach Anspruch 2, dadurch gekennzeichnet, daß im Mantel des Bodenelementes (w) durch Schwächungslinien im Mantelmaterial potentielle Durchbruchsstellen für Mantelöffnungen vorgesehen sind.

4. Einrichtung nach einem der Ansprüche 1 - 3, dadurch gekennzeichnet, daß an den Wannenboden (e) des Bodenelementes (w), wie an sich bekannt, ein Drainagerohr (D) angeschlossen ist.

5. Einrichtung nach einem der Ansprüche 1 - 4, dadurch gekennzeichnet, daß das Filtergehäuse (G) mit einer regenabweisenden Kappe (k) versehen ist.

6. Einrichtung nach einem der Ansprüche 1 - 5, dadurch gekennzeichnet, daß die Gehäuseelemente (w, g) formschlüssig ineinandergreifende Stoßfugen (sf) aufweisen.

7. Anlage zum Abscheiden von Schad- oder Geruchsstoffen aus Abgasen oder Ablüften durch biologische Filterung, dadurch gekennzeichnet, daß sie aus mehreren durch Serien-, Parallel- oder Sternschaltung als Module in ein Rohgasverteilungsnetz (B) einbezogenen Filtereinheiten (C) nach einem der Ansprüche 1 - 6 besteht (Fig, 2, 3 und 4).

8. Anlage nach Anspruch 7, dadurch gekennzeichnet, daß in dem Rohgasverteilungsnetz (B) steuerbare Ventile zur wählbaren Zu- oder Abschaltung einzelner Moduleinheiten vorgesehen sind.

## Claims

1. Appliance for the precipitation of pollutants or odours from gaseous media by biological filtration, with a cylindrical or prismatic filter housing (G) or vertical axis, in which a layer of biological filter material is arranged above a gas-permeable supporting bottom (d), and with devices for conveying the gaseous medium in an axial direction through this filter material layer, characterised in that the filter housing (G) consists of pre-fabricated housing elements (w, g) which are arranged above one another and are composed of concrete, plastic, wood or sheet metal, and the lowest of which is a trough-shaped bottom element (w) with a gas-permeable supporting bottom (d) inserted above the trough bottom (e) and with at least one casing orifice (a1, a2) arranged between these two bottoms (d, e), whereas the housing elements arranged above this bottom element (w) are ring-like or frame-like housing elements (g) surrounding the biological filter material (f) over the layer height of this material and of the same cross-section as the bottom element (w).

2. Appliance according to Claim 1, characterised in that a plurality of casing orifices (a1, a2) is formed in the casing of the bottom element (w), preferably at equal angular distances.

3. Appliance according to Claim 2, characterised in that potential perforation points for casing orifices are provided in the casing of the bottom element (w) by weakening lines in the casing material.

4. Appliance according to one of Claims 1 - 3, characterised in that, as is known per se, a drainpipe (D) is connected to the trough bottom (e) of the bottom element (w).

5. Appliance according to one of Claims 1 - 4, characterised in that the filter housing (G) is provided with a rainproof cap (k).

6. Appliance according to one of Claims 1 - 5, characterised in that the housing elements (w, g) have joints (sf) positively engaging in one another.

7. System for the precipitation of pollutants or odours from exhaust gases or exhaust air by biological filtration, characterised in that it comprises a plurality of filter units (C) incorporated in a crude-gas distribution network (B) as modules by series, parallel or star connection, according to one of Claims 1 - 6 (Figs. 2, 3 and 4).

8. System according to Claim 7, characterised in that controllable valves for the selectable switching on or off of individual module units are provided in the crude-gas distribution network (B).

## Revendications

1. Dispositif servant à éliminer, par filtration biologique, des substances polluantes ou odorantes contenues dans des milieux gazeux, comportant une enceinte de filtration cylindrique ou prismatique (G) à axe vertical, dans laquelle une couche de matière filtrante biologique est disposée sur un fond de support (d) perméable aux gaz, et des dispositifs pour faire passer le milieu gazeux à travers cette couche de matière filtrante dans un sens axial, caractérisé en ce que l'enceinte de filtration (G) est constituée d'éléments d'enceinte (w, g) superposés et préfabriqués en béton, en matière plastique, en bois ou en tôle, dont l'élément inférieur est un élément de fond en forme de cuve (w) comportant un fond de support (d) perméable aux gaz disposé au-dessus du fond de la cuve (e) et au moins une ouverture latérale (a₁, a₂) prévue entre ces deux fonds (d, e), tandis que les éléments d'enceinte disposés au-dessus de cet élément de fond (w) jusqu'au-dessus de la hauteur de la couche de la matière de filtration biologique (f) sont des éléments de boîtier en forme d'anneau ou de cadre (g) entourant cette matière et ayant la même section transversale que l'élément de fond (w).

2. Dispositif suivant la revendication 1, caractérisé en ce que plusieurs ouvertures latérales (a₁, a₂) sont ménagées dans la périphérie de l'élément de fond (w), de préférence à des distances angulaires égales.

3. Dispositif suivant la revendication 2, caractérisé en ce que des endroits de percement potentiels pour des ouvertures latérales, formés par des lignes d'affaiblissement, sont ménagés dans la périphérie de l'élément de fond (w) dans la matière périphérique.

4. Dispositif suivant l'une quelconque des revendications 1 à 3, caractérisé en ce qu'un tuyau de drainage (D) est raccordé au fond de cuve (e) de l'élément de fond (w), d'une manière connue.

5. Dispositif suivant l'une quelconque des revendications 1 à 4, caractérisé en ce que l'enceinte de filtration (G) est pourvue d'une coiffe antipluie (k).

6. Dispositif suivant l'une quelconque des revendications 1 à 5, caractérisé en ce que les éléments d'enceinte (w, g) comportent des joints (sf) s'emboîtant l'un dans l'autre avec épousement de forme.

7. Installation pour éliminer, par filtration biologique, les substances polluantes et odorantes de gaz d'échappement ou d'air d'évacuation, caractérisée en ce qu'elle est constituée de plusieurs unités de filtration (C) incorporées, en tant que modules dans un réseau de distribution (B) du gaz brut par un montage en série, en parallèle ou en étoile suivant l'une quelconque des revendications 1 à 6 (Fig. 2, 3 et 4).

8. Installation suivant la revendication 7, caractérisée en ce que des valves contrôlables sont prévues dans le réseau de distribution (B) de gaz brut en vue, au choix, de connecter ou déconnecter certaines unités de modules individuelles.
